# EUROPEAN PATENT APPLICATION

(11) **EP 3 223 478 A1**
(43) Date of publication of application: **27.09.2017**
(21) Application number: 15860389.4
(22) Date of filing: 20.01.2015
(51) Int. Cl.: H04L 12/861

(54) **PACKET PROCESSING METHOD AND DEVICE, AND STORAGE MEDIUM**

(30) Priority: 20.11.2014 CN 201410667895
(71) Applicant: ZTE Corporation, Shenzhen, Guangdong 518057 (CN)
(72) Inventor: LI, Liangfeng, Shenzhen Guangdong 518057 (CN); YANG, Jinmei, Shenzhen Guangdong 518057 (CN)
(74) Representative: Studio Torta S.p.A.
(86) International application number: PCT/CN2015/071131
(87) International publication number: WO 2016/078212

(57) **Abstract**

Disclosed is a packet processing method. The method comprises: receiving packets, distributing the packets to valid channels, and recording channel identifiers of the channels; and reading the channel identifiers according to a sequence of recording the channel identifiers, and every time one channel identifier is read, sending the packets in the channel corresponding to the read channel identifier till all the packets are sent. Also disclosed are a packet processing device and a storage medium.

## Description

### TECHNICAL FIELD

The present disclosure relates to the technical field of communication, and more particularly, to a message processing method, device, and a storage medium.

### BACKGROUND

With the rapid development of high-speed data communication network, the line speed of a switch port has reached several hundred Gbit/S, therefore, it is required that the network equipment has a strong message processing efficiency. In order to improve the efficiency of the network equipment to process the message, generally a distributed processing is adopted for the message. That is, after receiving the message, the message entering from an ingress port is assigned to multiple channels, and the message is processed in parallel in respective channels, and then the message is sent out through an egress port in an order of entering the ingress port.

However, the problem of out-of-order of the message may occur when adopting the distributed processing to process the message. That is, when a message is distributed to multiple channels, the message will pass through several intermediate nodes, and the message is not sent out in the entering order at the egress port, which seriously affects the performance of network equipment. For example, in the 1588V2 precise clock synchronization protocol, the message out of order will lead to an inaccuracy of a timestamp carried by the message, and thus the synchronization of network equipment cannot be achieved. Therefore, how to prevent the loss of the message and out of order of the message under the condition of using the distributed processing to process the message are urgent issues to be solved.

### SUMMARY

In view of the above, the embodiments of the present disclosure desire to provide a message processing method, device and a storage medium, which can not only improve the efficiency of processing the message (packet), but also ensure that the sending order of the message is consistent with the receiving order of the message.

The technical solution of the embodiments of the disclosure is realized as follows.

The embodiments of the present disclosure provide a message processing method, including: receiving a message, distributing the message to an effective channel, and recording a channel identifier of the channel; and reading the channel identifiers in an order of recording the channel identifiers, and every time one channel identifier is read, sending the message in the channel corresponding to the read channel identifier until all the messages are sent.

In the above implementation scheme, the distributing the message to the effective channel includes: calculating respectively traffic of the received message and message traffic that can be processed by the channel, and when the traffic of the received message is less than the message traffic that can be processed by the channel, distributing the received message to the channel.

In the above implementation scheme, after distributing the message to the effective channel, the method further includes: modifying field contents of the distributed message, and/or identifying a priority of the distributed message, and storing the modified and/or identified message.

In the above implementation scheme, the sending the message in the channel corresponding to the read channel identifier, includes: sending the firstly stored message among the currently stored messages in the channel corresponding to the read channel identifier.

In the above implementation scheme, after reading the channel identifiers in the order of recording the channel identifiers, the method further includes: deleting the channel identifier that has been read.

The embodiments of the present disclosure also provide a message processing device, including: a message receiving module, a channel identification module, and a message sending module; wherein
the message receiving module is configured to receive a message, and distribute the message to an effective channel;
the channel identification module is configured to record a channel identifier of the channel; and the message sending module is configured to read the channel identifiers in an order of recording the channel identifiers, and every time one channel identifier is read, send the message in the channel corresponding to the read channel identifier until all the messages are sent.

In the above implementation scheme, the message receiving module is configured to respectively calculate traffic of the received message and message traffic that can be processed by the channel, and when the traffic of the received message is less than the message traffic that can be processed by the channel, distribute the received message to the channel.

In the above implementation scheme, the device further includes: a message processing module and a storage module; wherein the message processing module is configured to modify field contents of the distributed message, and/or identify a priority of the distributed message; and the storage module is configured to store the modified and/or identified message.

In the above implementation scheme, the message sending module is configured to send the firstly stored message among the currently stored messages in the channel corresponding to the read channel identifier.

In the above implementation scheme, the message sending module is further configured to delete the channel identifier that has been read after reading the channel identifiers in the order of recording the channel identifiers.

The embodiments of the present disclosure also provide a computer storage medium storing computer-executable instructions, wherein the computer-executable instructions are configured to execute the above-mentioned message processing method.

Through the message processing method, device and the storage medium provided by the embodiments of the present disclosure, a message is received, the message is distributed to an effective channel, and a channel identifier of the channel is recorded and stored; the distributed message is processed and stored; the channel identifiers are read in an order of storing the channel identifiers, and every time one channel identifier is read, the message in the channel corresponding to the read channel identifier is sent until all the messages are sent. In this way, in the case of distributing the messages to multiple channels, the sequence of receiving the messages is identified by recording the channel identifiers of the received messages, and the messages are sent in turn according to the receiving sequence of the messages, which can avoid the problems of message loss and message disorder occurred in the sending procedure of the messages.

### BRIEF DESCRIPTION OF THE DRAWINGS

Fig. 1 is a schematic diagram of a basic processing flow of a message processing method according to an embodiment of the present disclosure;
Fig. 2 is a schematic diagram of a detailed processing flow of the message processing method according to the embodiment of the present disclosure; and
Fig. 3 is a schematic diagram showing a configuration of a message processing device according to an embodiment of the present disclosure.

### DETAILED DESCRIPTION

In the embodiments of the present disclosure, the message is received, the message is distributed to an effective channel, a channel identifier of the channel is recorded; the channel identifiers are read in an order of recording the channel identifiers, and each time one channel identifier is read, the message within the channel corresponding to the read channel identifier is sent until all the messages are sent.

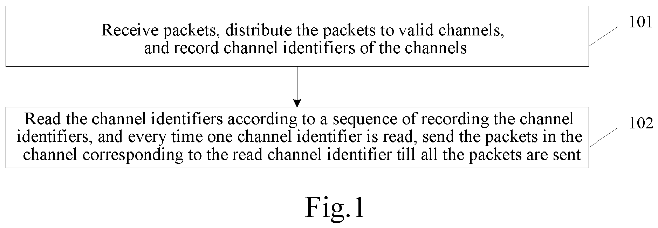

The basic processing flow of the message processing method according to the embodiments of the present disclosure is as shown in Fig. 1, which includes the following steps.

In step 101, a message is received, the message is distributed to an effective channel, and a channel identifier of the channel is recorded.

In particular, a message receiving module receives the message, calculates traffic of the received message and message traffic that can be processed by the channel, and when the traffic of the received message is greater than the message traffic that can be processed by the channel, does not distribute the message to the channel; and when the traffic of the received message is less than the message traffic that can be processed by the channel, distribute the received message to the channel, a channel identification module records a channel identifier of the distributed message; according to actual needs, the recorded channel identifier may be stored in a storage device for permanent storage.

In step 102, the channel identifiers are read in an order of recording the channel identifiers. Each time one channel identifier is read, the message in the channel corresponding to the read channel identifier is sent until all the messages are sent.

Specifically, the channel identifiers are read in the order of storing the channel identifiers and the channel identifier that has been read is deleted. Each time one channel identifier is read, the firstly stored message among the currently stored messages in the channel corresponding to the read channel identifier is transmitted until all the messages are transmitted.

After distributing the message to the effective channel, the method further includes: modifying field contents of the distributed message and/or identifying a priority of the distributed message according to actual demands by the message processing module, and storing the modified and/or identified message by the storage module.

In the embodiments of the present disclosure, the message processing method may be applied to a computer network, or may be applied to any scene where the messages need to be processed in individual channel at a high speed, the messages need the traffic control and channel merging.

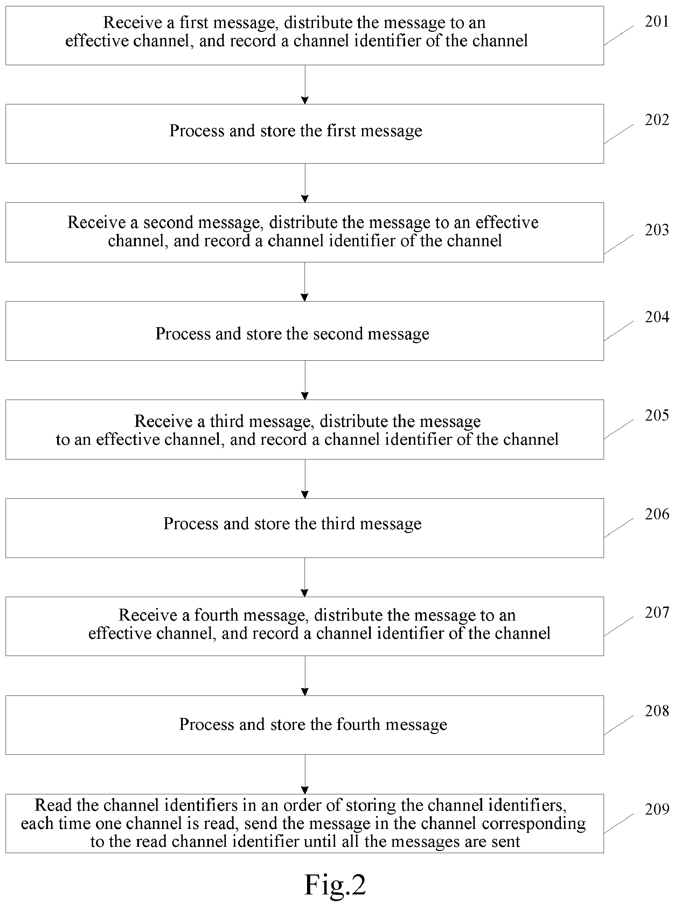

The detailed processing flow of the message processing method according to the embodiments of the present disclosure is given by using an example in which the messages are processed in three channels at the same time. As shown in Fig. 2, the method includes the following steps.

In step 201, a first message is received, the message is distributed to an effective channel, and a channel identifier of the channel is recorded.

Specifically, the message receiving module receives the first message, calculates traffic of the first message to be 10 Mbit, and the traffic of a first channel to be 15 Mbit. The traffic of the first message is smaller than the message traffic that can be processed by the first channel, thereby the first message is distributed to the first channel; and the message identification module records the channel identifier of the first channel as "1".

In step 202, the first message is processed and stored.

Specifically, the message processing module modifies field contents of the first message, and the storage module stores the modified first message.

In step 203, a second message is received, the message is distributed to an effective channel, and a channel identifier of the channel is recorded.

Specifically, the message receiving module receives the second message, calculates the traffic of the second message to be 15Mbit, and the traffic of a second channel to be 50Mbit. The traffic of the second message is smaller than the message traffic that can be processed by the second channel, thereby the second message is distributed to the second channel; and the message identification module records the channel identifier of the second channel as "2".

In step 204, the second message is processed and stored.

In particular, the message processing module identifies a priority of the second message, and the storage module stores the modified second message.

In step 205, a third message is received, the message is distributed to an effective channel, and a channel identifier of the channel is recorded.

In particular, the message receiving module receives the third message, calculates the traffic of the third message to be 10 Mbit, and the traffic of a third channel to be 100 Mbit. The traffic of the third message is smaller than the message traffic that can be processed by the third channel, thereby the third message is distributed to the third channel; and the message identification module records the channel identifier of the third channel as "3".

In step 206, the third message is processed and stored.

Specifically, the message processing module identifies the priority of the third message, and the storage module stores the modified third message.

In step 207, a fourth message is received, the message is distributed to an effective channel, and a channel identifier of the channel is recorded.

Specifically, the message receiving module receives the fourth message, calculates the traffic of the fourth message to be 10 Mbit, and the traffic of the first channel to be 5 Mbit. The traffic of the fourth message is smaller than the message traffic that can be processed by the first channel, thereby the fourth message is not distributed to the first channel; the traffic of the second channel is 35 Mbit, the traffic of the fourth message is less than the message traffic that can be processed by the second channel, so the fourth message is distributed to the second channel; and the message identification module records the channel identifier of the second channel as "2".

In step 208, the fourth message is processed and stored.

Specifically, the message processing module identifies a priority of the fourth message, and the storage module stores the modified fourth message.

In step 209, the channel identifiers are read in the order of storing the channel identifiers, each time one channel identifier is read, the message in the channel corresponding to the read channel identifier is transmitted until all the messages are transmitted.

In particular, the order of the channel identifiers stored in the storage module is "1-2-3-2" at this time, and when the message sending module reads the channel identifiers in the order of storing the channel identifiers, the first read channel identifier is "1", and the message in the first channel corresponding to the channel identifier "1" is sent.

The channel identifier read by the message sending module secondly is "2", and the message in the second channel corresponding to the channel identifier "2" is sent. Here, there are two messages in the second channel, and the firstly stored message should be sent.

The channel identifier read by the message sending module thirdly is "3", and the message in the third channel corresponding to the channel identifier "3" is sent.

The channel identifier read by the message sending module fourthly is "2", and the message in the second channel corresponding to the channel identifier "2" is sent. At this time, there is only one message in the second channel, and this message is sent.

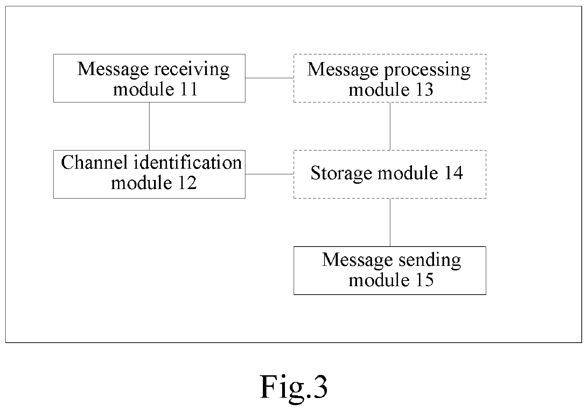

In order to realize the above-described message processing method, an embodiment of the present disclosure also provides a message processing device. The constitute structure of the message processing device is shown in Fig. 3, and the message processing device includes: a message receiving module 11, a channel identification module 12, and a message sending module 15.

The message receiving module 11 is configured to receive a message, and distribute the message to an effective channel.

The channel identification module 12 is configured to record a channel identifier of the channel. The message sending module 15 is configured to read the channel identifiers in an order of recording the channel identifiers. Each time one channel identifier is read, the message in the channel corresponding to the read channel identifier is sent until all the messages are sent.

In the above implementation scheme, the message receiving module 11 is configured to respectively calculate traffic of the received message and message traffic that can be processed by the channel, and when the traffic of the received message is smaller than the message traffic that the channel can process, distribute the received message to this channel.

In the above implementation scheme, the device further includes a message processing module 13 and a storage module 14.

The message processing module is configured to modify field contents of the distributed message and/or identify a priority of the distributed message.

The storage module 14 is further configured to store the modified and/or identified message.

In the above implementation scheme, the message sending module 15 is configured to send the firstly stored message among the currently stored messages in the channel corresponding to the read channel identifier.

In the above implementation scheme, the message sending module 15 is further configured to delete the channel identifier that has been read after reading the channel identifiers in the order of recording the channel identifiers.

In the embodiments of the present disclosure, the terminal device may be a mobile terminal such as a mobile phone or a tablet computer, and may be an electronic device such as a television remote controller.

The storage module 14 in the message processing device according to the embodiment of the present disclosure may be implemented by a storage device such as a hard disk; the message receiving module 11, the channel identification module 12, the message processing module 13, and the message sending module 15 may be implemented by a processor, or may be implemented by a specific logic circuit. The processor may be a central processing unit (CPU), a microprocessor (MPU), a digital signal processor (DSP), a field programmable gate array (FPGA), or the like.

In the embodiments of the present disclosure, if the above-described message processing method is implemented in the form of a software function module and is sold or used as a standalone product, it may be stored in a computer-readable storage medium. Based on this understanding, the essence or a portion contributing to the prior art in the technical solution of the embodiments of the present disclosure may be embodied in the form of a software product stored in a storage medium including a number of instructions such that a computer device (which may be a personal computer, a server, or a network device, etc.) performs all or a part of the method described in the various embodiments of the present disclosure. And the aforementioned storage medium includes a variety of media that can store program code, such as a USB disk, a mobile hard disk, a read only memory (ROM), a magnetic disk, or an optical disk. Thus, the embodiments of the present disclosure are not limited to any particular combination of hardware and software.

Accordingly, the embodiments of the present disclosure further provide a computer storage medium in which a computer program is stored and executed for performing the above-described message processing method according to the embodiments of the present disclosure.

The foregoing is merely preferred embodiments of the present disclosure and is not intended to limit the protection scope of the present disclosure.

## Claims

1. A message processing method, comprising:
receiving a message, distributing the message to an effective channel, and recording a channel identifier of the channel; and
reading the channel identifiers in an order of recording the channel identifiers, and every time one channel identifier is read, sending the message in the channel corresponding to the read channel identifier until all the messages are sent.

2. The message processing method according to claim 1, wherein the distributing the message to the effective channel comprises:
calculating respectively traffic of the received message and message traffic that can be processed by the channel, and when the traffic of the received message is less than the message traffic that can be processed by the channel, distributing the received message to this channel.

3. The message processing method according to claim 1 or 2, wherein after distributing the message to the effective channel, the method further comprises:
modifying field contents of the distributed message, and/or identifying a priority of the distributed message, and storing the modified and/or identified message.

4. The message processing method according to claim 1 or 2, wherein the sending the message in the channel corresponding to the read channel identifier comprises:
sending the firstly stored message among the currently stored messages in the channel corresponding to the read channel identifier.

5. The message processing method according to claim 1 or 2, wherein after reading the channel identifiers in the order of recording the channel identifiers, the method further comprises:
deleting the channel identifier that has been read.

6. A message processing device, comprising: a message receiving module, a channel identification module, and a message sending module; wherein
the message receiving module is configured to receive a message, and distribute the message to an effective channel;
the channel identification module is configured to record a channel identifier of the channel; and
the message sending module is configured to read the channel identifiers in an order of recording the channel identifiers, and every time one channel identifier is read, send the message in the channel corresponding to the read channel identifier until all the messages are sent.

7. The message processing device according to claim 6, wherein the message receiving module is configured to respectively calculate traffic of the received message and message traffic that can be processed by the channel, and when the traffic of the received message is less than the message traffic that can be processed by the channel, distribute the received message to this channel.

8. The message processing device according to claim 6 or 7, further comprising: a message processing module and a storage module; wherein
the message processing module is configured to modify field contents of the distributed message, and/or identify a priority of the distributed message; and
the storage module is configured to store the modified and/or identified message.

9. The message processing device according to claim 6 or 7, wherein the message sending module is configured to send the firstly stored message among the currently stored messages in the channel corresponding to the read channel identifier.

10. The message processing device according to claim 6 or 7, wherein the message sending module is further configured to delete the channel identifier that has been read after reading the channel identifiers in the order of recording the channel identifiers.

11. A computer storage medium storing computer-executable instructions, wherein the computer-executable instructions are configured to execute a message processing method according to any one of claims 1 to 5.
